# EUROPEAN PATENT SPECIFICATION

(11) **EP 3 740 716 B1**
(45) Date of publication and mention of the grant of the patent: **08.03.2023**
(21) Application number: 19703191.7
(22) Date of filing: 14.01.2019
(51) Int. Cl.: F23N 1/00, F16K 5/10

(54) **TAP FOR GAS BURNERS**
ZAPFHAHN FÜR GASBRENNER
ROBINET POUR BRÛLEURS À GAZ

(30) Priority: 15.01.2018 IT 201800000970
(43) Date of publication of application: 25.11.2020
(73) Proprietor: SABAF S.p.A., 25035 Ospitaletto (BS) (IT)
(72) Inventor: DORA, Massimo, 25035 Ospitaletto (BS) (IT)
(74) Representative: Marietti, Andrea
(86) International application number: PCT/IB2019/050267
(87) International publication number: WO 2019/138386

(56) References cited:
- EP-A1- 2 171 325
- FR-A- 1 517 003
- US-A1- 2005 178 450
- US-A1- 2011 174 405
- US-B1- 9 410 701

## Description

### FIELD OF THE INVENTION

The present invention relates to a gas burner tap, of the type for example used in gas cookers.

More specifically, the present invention relates to a tap able to adjust the inflow of various gas typologies to a respective gas burner, such as for example a "dual fuel" type tap, i.e. designed for alternately operating with natural gas (NG), for example essentially methane, or liquefied petroleum gases (LPGs) usually containing propane and/or butane.

### KNOWN PRIOR ART

Taps are known, for example for gas cookers, designed for alternately operating with different gas typologies. Different typologies of use entail the need of adapting the gas flow section inside the tap to the gas type, due for example to different physical distribution conditions (such as pressure) and the calorific value required for each gas typology.

Such a tap is known from document FR 1,517,003 that describes a tap designed for allowing the alternated flow of three gas typologies.

Such a tap has a body containing a valve plug, also named male, having different groups of holes having different diameter and alternately selectable in order to allow the flow of three different gases.

The male has three groups of channels connecting an inlet duct to a single outlet duct.

By rotating the valve plug to different angular positions, the correct gas flow channel can be selected depending on the type of gas used by a burner arranged downstream of the tap itself.

Taps specifically designed for alternately operating with natural gas (NG) or liquefied petroleum gases (LPGs) are also known.

Such a tap is known from document US 2012/031391.

Document US 2012/031391 describes a tap provided with a gas inlet channel and a gas outlet channel between which a rotatable valve plug is interposed, which provides a first gauged hole to allow a minimum natural gas flow and a second gauged hole to allow a minimum LPG flow.

A knob drives a rod that allows the valve plug to be rotated from at least one first angular position, in which the first gauged hole allows the minimum natural gas flow, to a second angular position in which the second gauged hole allows a minimum LPG flow.

Document EP 2944876A1 describes a gas cooker tap that can alternately operate with natural gas (NG), for example substantially methane, or with liquefied petroleum gases (LPGs). The tap comprises a tap body having an inlet duct and an outlet duct. Inside the tap body there is a rotatable adjusting element that provides a plurality of inlet ducts communicating with the inlet duct of the tap. The tap allows the gas flow to be varied in the outlet duct by the rotation of the adjusting element. One of the inlet ducts obtained in the rotatable adjusting element has a groove that allows the inlet path in the adjusting element corresponding to a gas minimum flow Qₘᵢₙ to be in the same angular and axial positions for both the natural gas (NG) and the liquefied petroleum gases (LPGs).

US2005/178450 also describes a gas cooker tap.

Such taps of the prior art suffer from the drawback of being complex to be manufactured and thus not always reliable and little cheap.

Object of the present invention is to implement a burner tap that can be used with a plurality of gases having different typologies, and thus with different thermodynamic conditions, and in particular that can be used for both gases requiring large flow sections and gases requiring smaller or reduced flow sections, and which is simple and cheap to be implemented.

Illustrative but not limitative examples of the invention potential, of such different gas typologies for which the tap is designed, are natural gas (NG) and liquefied petroleum gases (LPGs).

### BRIEF SUMMARY OF THE INVENTION

This and other objects are achieved by a burner tap according to the object of claim 1.

According to the invention, the tap provides an adjustable choking element designed to be movable from a first position, in which the afore said choking element defines a maximum value of the gas flow port, to a position in which the afore said choking element defines a minimum value of the gas flow port.

An advantage of this solution is given by the fact that it allows the burner tap to be adapted to the operation with natural gas (NG) or with liquefied petroleum gases (LPGs), or in general to the operation with two fuel gases having different characteristics and physical conditions (for example delivery pressure), by acting on an adjustable choking member, avoiding the use of valve plugs complex and costly to be manufactured.

According to the invention, downstream of the valve plug with respect to the gas feed direction there are at least one first and one second ducts which allow the gas flowing towards the tap outlet and wherein the adjustable choking element can be moved from a first position, in which the afore said choking element defines a maximum value of the flow port of at least one of the afore said ducts, to a position in which the afore said choking element defines a minimum value of the flow port of both the afore said ducts.

An advantage of this solution is that it allows the burner tap to be adapted to the operation with natural gas (NG) or with liquefied petroleum gases (LPGs), or in general to the operation with two fuel gases having different characteristics and physical conditions (for example delivery pressure), by acting on an adjustable choking member, avoiding the use of valve plugs complex and costly to be manufactured.

According to an embodiment of the invention, the inlet of the first duct is separated from the inlet of the second duct.

According to a further embodiment of the invention, the valve plug comprises a first hole series and a second hole series, wherein each series of holes can be arranged at least partially at the inlet of a respective duct.

An advantage of this solution is just given by the presence of the dual hole series that are tailored on the gas typology and on the burner power such to make the burner operation progressive also when switching from a gas to another.

According to another embodiment of the invention, the holes of each series of holes have progressively increasing, decreasing or constant sizes.

An advantage of this solution is that it allows the gas inflow to be graduated according to the mentioned progressiveness.

According to a further embodiment of the invention, the choking element, in its first position, opens both the ducts completely.

Such an embodiment, with suitable dimensioning of the holes on the plug valve, can allow the tap to operate with natural gas.

According to a further embodiment of the invention, the choking element, in its second position, closes the first duct completely.

Such an embodiment, by using the same dimensioning of the flow sections of the holes on the plug valve that allows the tap to operate with natural gas when both the ducts are open, can allow the tap to operate with LPG.

Further characteristics of the invention can be inferred from the dependent claims.

### BRIEF DESCRIPTION OF THE FIGURES

Further characteristics and advantages of the invention will be evident by reading the following description provided for illustration purposes and without limitation, with the aid of the figures illustrated in the attached tables, wherein:
- figure 1 is an axonometric view of a burner tap according to an embodiment of the invention;
- figure 2 is a sectional view of a burner tap according to an embodiment of the invention in a first operative arrangement and valve plug closed;
- figure 3 is a sectional view of the burner tap of figure 2 in a first second operative arrangement and valve plug closed;

- figure 4 is a sectional view of the burner tap in the first operative arrangement and valve plug open;
- figure 5 is a sectional view of the burner tap in the first operative arrangement with the valve plug in a flow choking position;
- figure 6 is a sectional view of the burner tap in the second operative arrangement and valve plug open;
- figure 7 is a sectional view of the burner tap in the second operative arrangement with the valve plug in a flow choking position;
- figures 8 and 8bis are sectional views of a detail of the tap of the preceding figures wherein the valve plug is depicted in two different operative arrangements; and
- figures 9 and 10 are views of a valve plug belonging to the inventive tap.

All the figures fail to describe the feature of the invention as defined by the claims "said choking element defines a minimum value of the flow port for both said ducts ".

### DETAILED DESCRIPTION OF SOME EMBODIMENTS OF THE PRESENT INVENTION

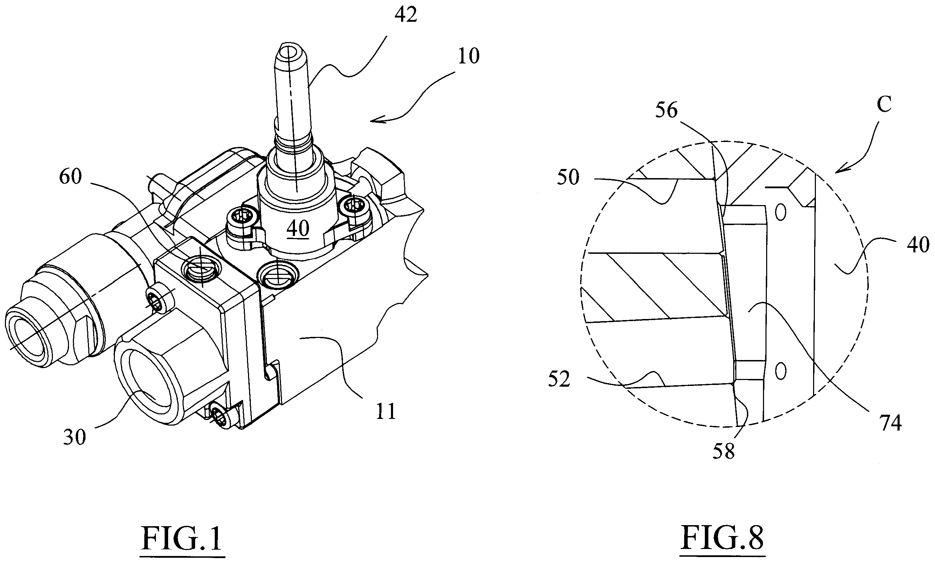

In reference firstly to figure 1, an axonometric view of a burner tap is pointed out, in particular for gas cookers, cook tops or gas appliances in general, according to an embodiment of the invention and globally denoted by numeral reference 10.

The tap 10 is of the "dual fuel" type, i.e. designed to be able to alternately operate with two gas typologies, for example natural gas (NG) or liquefied petroleum gases (LPGs).

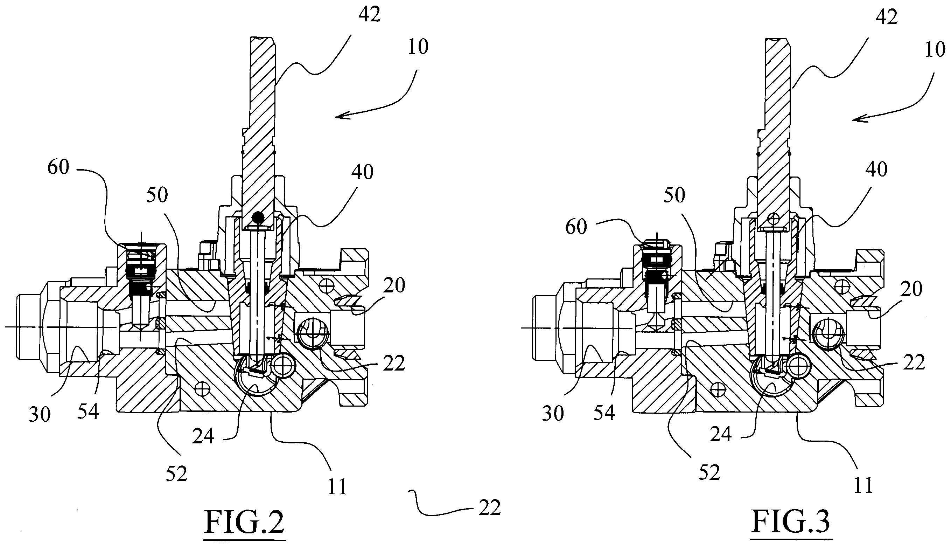

The tap 10, as also visible in figures 2 to 7, comprises a body 11; the tap 10 is provided with an inlet 20 for the gas entering the tap 10 and an outlet 30 for the gas exiting from the tap 10, wherein a valve plug 40, also named male, is interposed between the afore said inlet 20 and the afore said outlet 30.

As known, the gas inlet 20 of the tap 10 is intended to be connected to a pipe delivering a fuel gas, for example belonging to a distribution network, whereas the gas outlet 30 of the tap 10 is intended to be connected to a burner (not shown herein).

The valve plug 40, for example substantially truncated-cone-shaped, is rotatable and switchable by a driving rod 42, between at least one first gas flow blocking or closing position inside the tap body 11 and at least one second position that allows the gas flow from the inlet 20 to the outlet 30 of the tap 10.

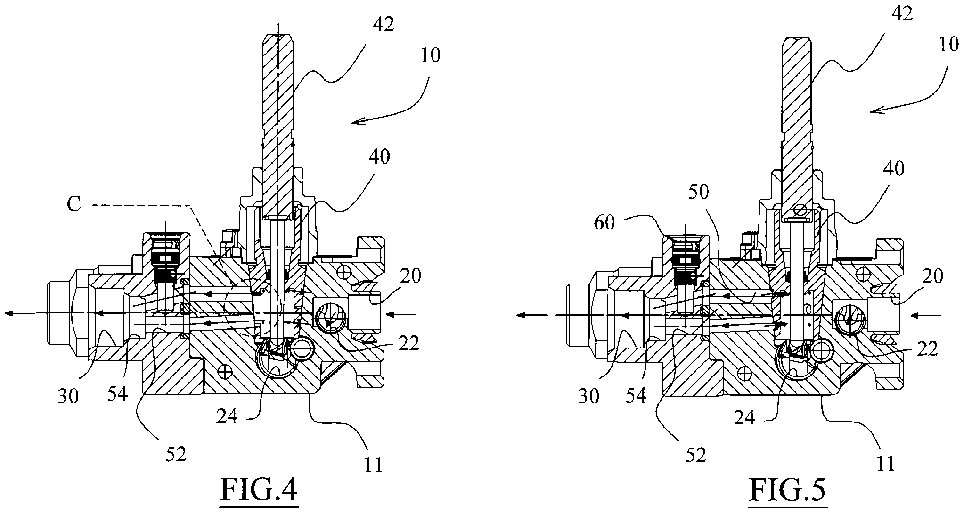

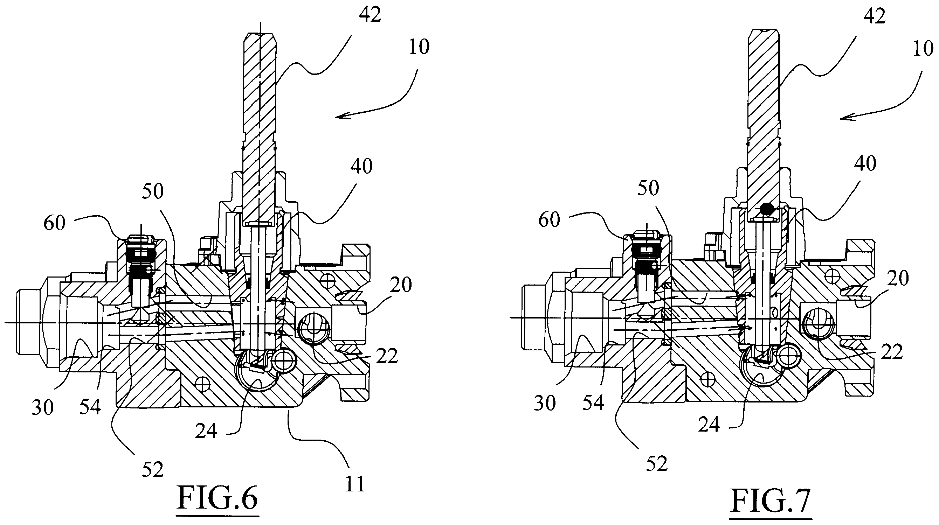

In figure 2 (and in figures 4 and 5) the tap 10 is shown, in section, in an arrangement suitable for the use with gases such as, for example, liquefied petroleum gases (LPGs), whereas in figure 3 (and in figures 6 and 7) the tap 10 is shown in an arrangement suitable for the use with gases that require large or larger flow sections, for example natural gas.

In both the arrangements of figures 2 and 3, the valve plug 40 is closed i.e. is rotated into a position that does not allow the gas flow from the inlet 20 for the gas entering the tap 10 to the outlet 30 for the gas exiting from the tap 10.

In an embodiment of the invention (visible in figures 2-7), downstream of the valve plug 40 there are at least one first 50 and one second 52 ducts that allow the gas flow towards the outlet 30 of the tap 10.

It has to be observed that herein and in the following the terms "upstream" and "downstream" are meant as referring to the gas outflow direction within the tap 10, that as mentioned proceeds from the inlet 20 towards the outlet 30.

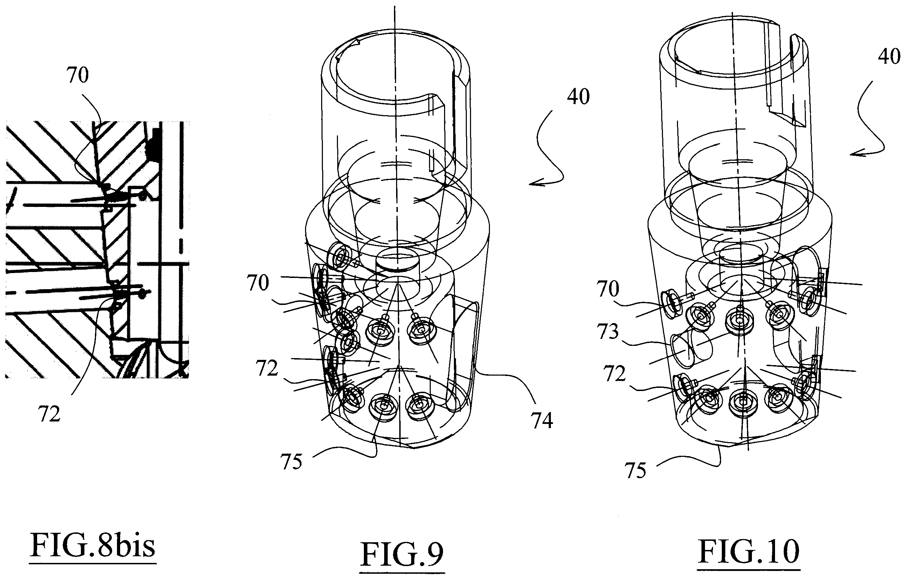

Specifically, in this embodiment, the inlet 56 of the first duct 50 is separated from the inlet 58 of the second duct 50 (also see the detail C of figure 8).

Preferably, but not necessarily, the first 50 and the second 52 ducts merge into a single common length 54 arranged upstream of the outlet 30 for the gas exiting from the tap 10.

It has to be observed that in the particular embodiment of the invention herein shown, the gas flow section (port) of the ducts 50, 52 is the same (i.e. the ducts 50, 52 are cylindrical and have equal cross section diameter), but it is not excluded that in alternative embodiments such gas flow sections of the ducts 50, 52 can also be different from one another.

It also has to be observed that, in this and in the following figures, the outflow section of the holes 70, 72, 74 obtained on the valve plug 40 and better described in the following, and the flow section of the ducts 50, 52, are assumed to be such to allow the correct natural gas feed (with pressure for example of about 25 mbar) to the burner adjusted by the tap 10, when the gas flows through both the ducts 50, 52, while the outflow section of the second duct 52 is such to ensure the correct LPG feed (with pressure of about for example 45 mbar) to the burner, when the gas is prevented from flowing within the first duct 50.

In general, the pressures for the gases used in the present tap 10 can range from a minimum of 1 mbar to a maximum of 65 mbar. It has to be observed on the other hand that in the embodiment herein described, the alternated used of LGP and NG (natural gas) inside the same tap 10 is referred to, but it is not excluded that in other alternative embodiments the tap 10 can be used with fuel gases different from those herein stated.

The valve plug 40 can be fed from the bottom by means of a lower hole 75 and has a single slot hole 74, in addition to two parallel hole series (orders) 70, 72 as it will be seen (as visible in figures 9-10). The lower hole 75 is fluidically connected to the gas inlet 20 of the tap 10 and to the outflow holes 70, 72, 74 of the valve plug itself and extends along a preferably axial direction, i.e. a direction preferably coincident with the symmetry axis of the valve plug 40 itself and the respective driving rod 42.

In order to feed the valve plug 40, the body 11 of the tap 10 is provided with a duct leading the gas from the inlet 20 of the tap 10 to the lower hole 75 of the valve plug 40 and of which, in figures 2-7, portions are visible and denoted in the sections by numeral references 22, 24.

The valve plug 40 also has, as mentioned, in addition to the slot hole 74, two or more not necessarily gauged hole orders (series) 70, 72, contemporaneously open and also intended to be put into fluidic connection with the inner outflow section of the inlet 20 of the tap 10.

In particular, the valve plug 40 comprises a first 70 and a second 72 hole series, wherein each hole series 70, 72, or the slot hole 74, can be totally or partially arranged at the inlet 56, 58 of a respective duct 50, 52, in at least one opening position of the tap 10. It has to be observed that when the holes 70, 72 and/or the slot hole 74 are not arranged at the inlets 56, 58 of the ducts 50, 52, they are blocked by the inner walls of the body 11 of the tap 10, so that no fuel gas can flow through the their outflow sections in this case.

Preferably, the holes of each series 70, 72 have progressively increasing sizes. This way, by partially and selectively connecting the holes 70, 72 to the inlets 56, 58 of the ducts 50, 52, the gas delivery progressiveness to the burner can be ensured, when the tap 10 is switched to an opening position that just provides for the gas flowing in one or more of such holes 70, 72.

Advantageously, according to the present invention, in the afore said ducts 50, 52 there is a choking element 60 designed to be movable from a first position, in which the choking element 60 defines a maximum value of the flow port of at least one of the afore said ducts 50, 52, to a position in which the choking element 60 defines a minimum value of the flow port of both the afore said ducts 50, 52, such as for example, as it will be seen, complete blockage of a duct 50.

In figure 4 a sectional view of the tap 10 is shown, wherein the slot hole 74 is arranged at the inlet 56, 58 of a respective duct 50, 52, i.e. in a maximum opening position of the tap 10.

In such a figure, the choking element 60 is placed in a position in which such a choking element 60 defines a minimum value of the flow port of at least one of the afore said ducts 50, 52, in order to create an arrangement adapted for the use of the tap 10 with LPG gases.

In the embodiment depicted in figures 4 and 5, in order to allow the LPG inflow to the burner combined with the tap 10, the choking element 60 can be positioned such to completely block one of the ducts (for example the duct 50), since the gas inflow section within the other duct (duct 52) is such to allow the correct LPG feed, by the burner tap 10, adjusted by the valve plug 40 through one of the corresponding hole series, in this case denoted by 72, or by the slot hole 74.

The minimum value of the flow port of at least one of the afore said ducts 50, 52 defined by a position of the afore said choking element 60 can coincide with the complete blockage of such a flow port.

In figure 5 a sectional view of the tap 10 is depicted, wherein the valve plug 40 is rotated in order to position, at the inlet 56, 58 of a respective duct 50, 52, holes belonging to the hole series 70, 72 in order to thus choke the LPG gas flow.

In figure 6 a sectional view of the tap 10 is shown, wherein the slot hole 74 is arranged at the inlet 56, 58 of a respective duct 50, 52, i.e. in a maximum opening position of the tap 10.

In such a figure, as well as in the next figure 7, the choking element 60 is switched to a position in which such a choking element 60 defines a maximum value of the flow port of at least one of the afore said ducts 50, 52, on the other hand leaving the duct open, in order to create an arrangement adapted for the use of the tap 10 with natural gas (NG).

In other words, in the embodiment depicted in figures 4 and 5, in order to allow the natural gas inflow to the burner combined with the tap 10, the choking element 60 can be arranged such to allow both the ducts 50, 52 to be completely open.

In figure 7 a sectional view of the tap 10 is depicted, wherein the valve plug 40 is rotated in order to put holes belonging to the hole series 70, 72 at the inlet 56, 58 of a respective duct 50, 52, in order to thus choke the natural gas flow.

Figure 8bis is a detail of figure 7. In the embodiment according to the invention as defined by the claims (not depicted for simplification), the choking element 60, in its second position, also partially closes the second duct (52).

The choking element 60 is implemented by an adjustable screw provided for example with a shank shaped for blocking, at least partially and preferably progressively, at least one of the outflow sections of the ducts 50, 52.

In this case, the choking element 60 can provide a gauged hole (not depicted for simplification), such that in a first screwed position, said choking element 60 defines a maximum value of the flow port of one of the afore said ducts 50, 52 and, in a second screwed position, said choking element 60 defines a value of the flow port of both afore said ducts 50, 52 lower than the maximum value, and at most completely blocks the flow port (section) of at least one of the ducts 50, 52.

It has to be observed that such a tap 10 can be provided with a by-pass channel fed by the valve plug 40 through a respective by-pass hole 73, and herein not depicted, that is not affected by the choking element 60 and thus directly connects, for determined positions reached by the same valve plug 40, the inlet 20 and the outlet 30 of the tap 10.

In the operation of the tap 10 herein depicted, the valve plug 40 can be operated by the driving rod 42 to switch from a first blocking position to block the gas flow to at least one second position allowing the gas flow, and vice versa.

In this second gas flow position (i.e. with the tap 10 open), the gas can enter the tap from the inlet 20 in the valve plug 40 by following the path defined by the arrows (see figures 4 and 5) and from the sections 22 and 24 of the inlet duct until flowing through the lower hole 75 and then entering the ducts 50, 52 through the slot hole 74 or through the hole series 70, 72.

In the event the tap 10 has to be used with liquefied petroleum gases (LPGs), the choking element 60 can be switched to the position wherein it closes the flow port of the upper duct 50 (figure 4).

The gas therefore only flows through the duct 52 and merges into the single length 54 arranged upstream of the outlet 30 for the gas exiting from the tap 10 and outflows from the latter.

In the event the tap 10 has to be used with natural gas (NG), the choking element 60 can be switched to the position wherein it defines a maximum value of the flow port of the upper duct 50 (figure 6).

The gas therefore flows through both the ducts 50,52 and merges into the single length 54 arranged upstream of the outlet 30 for the gas exiting from the tap 10 and outflows therefrom in order to feed, for example, a gas cooker burner or other appliance.

According to the invention, the choking element is designed to also partially close the second duct 52.

This can occur, for example but not only, if as above mentioned, the choking element 60 is provided with a gauged hole such to switch from a completely open duct 50 to a choked duct by means of an intermediate screwed position or choked due to the gas flow through the gauged hole if the choking element 60 is deeply screwed.

Of course, as described above, the valve plug 40 can be rotated by acting on the driving rod 42, to be switched to a position wherein the gas flow flows through the holes of the hole series 70, 72 in order to then enter the respective ducts 50, 52.

The tap 10 herein depicted can be easily derived, in the manufacturing step, from a common gas tap, by modifying the outflow holes 70, 72, 74 for the gas outflowing from the valve plug 40, for example by adding a hole series 72 to an already provided series 70 and/or modifying the flow section of the slot hole 74, and coupling an appendage provided with the two ducts 50, 52 and the respective choking element 60 to the tap body, at its outlet.

In another embodiment variation (not shown for simplification), the choking element 60 is provided to be arranged at the single length 54 into which the first 50 and the second 52 ducts merge.

A further layout, which is not part of the invention as defined by the claims (not depicted for simplification) provides, in place of the two ducts 50, 52, a single duct arranged downstream of the valve plug 40 with respect to the gas feed direction in order to allow the gas flow towards the outlet 30 of the tap 10.

In this case, the tap 10 provides that the adjustable choking element 60 is designed to be movable from a first position. in which it defines a maximum value of the gas flow port, to a position in which it defines a minimum value of the gas flow port or a zero value.

Obviously, modifications or improvements may be added to the invention as described as a result of contingent or particular motivations, but without deviating from the scope of the invention claimed hereunder.

## Claims

1. A gas burner tap (10), configured to adjust the inflow of different gas typologies to a single gas burner, wherein the tap (10) comprises an inlet (20) for the gas entering the tap (10) and a single outlet (30) for the gas exiting from the tap (10), wherein a valve plug (40) is interposed between said inlet (20) and said single outlet (30), said valve plug (40) being switchable between at least one first blocking position to block the gas flow and at least one second position allowing the gas flow, wherein downstream of the valve plug (40) with respect of the gas feed direction there is at least one first duct (50) allowing the gas flow towards the single outlet (30) of the tap (10), wherein said tap (10) provides an adjustable choking element (60) designed to be moved from a first position, in which said choking element (60) defines a maximum value of the gas flow port, to a position in which said choking element (60) defines a minimum value of the gas flow port,
wherein downstream of the valve plug (40) with respect to the gas feed direction there are at least one first (50) and one second (52) ducts which allow the gas flowing towards the single outlet (30) of the tap (10) and wherein the adjustable choking element (60) can be moved from a first position, in which said choking element (60) defines a maximum value of the flow port of at least one of said ducts (50, 52), to a second position in which said choking element (60) defines a minimum value of the flow port for both said ducts (50, 52) and wherein said choking element (60) is an adjustable screw, the first and second position of said choking element (60) being chosen as a function of the typology of gas.

2. Tap (10) according to claim 1, wherein the inlet (56) of the first duct (50) is separated from the inlet (58) of the second duct (50).

3. Tap (10) according to claim 1, wherein said valve plug (40) comprises a first hole series (70) and a second hole series (72), wherein each series (70, 72) of holes can be arranged at least partially at the inlet (56, 58) of a respective duct (50, 52).

4. Tap (10) according to claim 3, wherein the holes of each series (70, 72) of holes have progressively increasing sizes, otherwise decreasing or constant.

5. Tap (10) according to claim 1, wherein said valve plug (40) is fed by a lower hole (75).

6. Tap (10) according to any one of the preceding claims, wherein said valve plug (40) is a rotatable valve plug operable by a driving rod (42).

7. Tap (10) according to claim 1, wherein said choking element (60), in its first position, opens both the ducts (50, 52) completely.

8. Tap (10) according to claim 1, wherein said choking element (60), in its second position, closes the first duct (50) completely.

9. Tap (10) according to claim 1, wherein the first (50) and the second (52) ducts merge into a single length (54) arranged upstream of the single gas outlet (30) from the tap (10).

10. Tap (10) according to claim 9, wherein the choking element is arranged at the only length (54) into which the first (50) and the second (52) ducts merge.

11. Tap (10) according to claim 1, wherein the choking element (60) provides such a gauged hole that, in a first screwed position, said choking element (60) defines a maximum value of the flow port of one of said ducts (50, 52) and, in a second screwed position, said choking element (60) defines a value of the flow port of one of said ducts (50, 52) lower than the maximum value.

12. Tap (10) according to claim 1, wherein the minimum value of the flow port of at least one of said ducts (50, 52), which is defined by a position of said choking element (60), coincides with the complete blockage of such flow port.

13. Tap (10) according to claim 1, wherein said tap (10) has a by-pass channel fed by the valve plug (40) through a respective by-pass hole (73) and not affected by the choking element (60), said by-pass channel being able to directly connect the gas inlet (20) and the single outlet (30) of the tap (10) when the valve plug (40) is arranged in a convenient position.

## Patentansprüche

1. Hahn (10) für Gasbrenner, der so konfiguriert ist, dass er den Zufluss verschiedener Gasarten zu einem einzigen Gasbrenner einstellt, wobei der Hahn (10) einen Einlass (20) für das in den Hahn (10) eintretende Gas und einen einzigen Auslass (30) für das aus dem Hahn (10) austretende Gas umfasst, wobei ein Ventilkegel (40) zwischen dem Einlass (20) und dem einzigen Auslass (30) angeordnet ist, wobei der Ventilkegel (40) zwischen mindestens einer ersten Sperrstellung zum Sperren des Gasstroms und mindestens einer zweiten Stellung, der den Gasstrom erlaubt, umschaltbar ist, wobei stromabwärts des Ventilkegels (40) in Bezug auf die Gasströmungsrichtung mindestens eine erste Leitung (50) vorhanden ist, die den Gasstrom zu dem einzigen Auslass (30) des Hahns (10) ermöglicht, wobei der Hahn (10) ein einstellbares Drosselelement (60) bereitstellt, das dazu bestimmt ist, von einer ersten Stellung, in der das Drosselelement (60) einen Maximalwert der Gasdurchflussöffnung definiert, in eine Stellung bewegt zu werden, in der das Drosselelement (60) einen Minimalwert der Gasdurchflussöffnung definiert,
wobei stromabwärts des Ventilkegels (40) in Bezug auf die Gasströmungsrichtung mindestens eine erste (50) und eine zweite (52) Leitung vorhanden sind, die es dem Gas ermöglichen, zum einzigen Auslass (30) des Hahns (10) zu strömen und wobei das einstellbare Drosselelement (60) aus einer ersten Stellung bewegt werden kann, in der das Drosselelement (60) einen Maximalwert der Durchflussöffnung von mindestens einem der Kanäle (50, 52) definiert, in eine zweite Stellung, in der das Drosselelement (60) einen Minimalwert der Durchflussöffnung für beide Kanäle (50, 52) definiert, und wobei das Drosselelement (60) eine einstellbare Schraube ist, wobei die erste und die zweite Stellung des Drosselelements (60) in Abhängigkeit von der Art des Gases gewählt wird.

2. Hahn (10) gemäß Anspruch 1, wobei der Einlass (56) des ersten Kanals (50) von dem Einlass (58) des zweiten Kanals (50) getrennt ist.

3. Hahn (10) gemäß Anspruch 1, wobei der Ventilkegel (40) eine erste Reihe von Bohrungen (70) und eine zweite Reihe von Bohrungen (72) umfasst, wobei jede Reihe von Bohrungen (70, 72) zumindest teilweise am Einlass (56, 58) eines jeweiligen Kanals (50, 52) angeordnet sein kann.

4. Hahn (10) gemäß Anspruch 3, wobei die Bohrungen jeder Reihe von Bohrungen (70, 72) allmählich zunehmende, abnehmende oder konstante Größen aufweisen.

5. Hahn (10) gemäß Anspruch 1, wobei der Ventilkegel (40) durch eine untere Öffnung (75) gespeist wird.

6. Hahn (10) gemäß einem der vorhergehenden Ansprüche, wobei der Ventilkegel (40) ein drehbarer Ventilkegel ist, der durch eine Antriebsstange (42) betätigbar ist.

7. Hahn (10) gemäß Anspruch 1, wobei das Drosselelement (60) in seiner ersten Stellung beide Kanäle (50, 52) vollständig öffnet.

8. Hahn (10) gemäß Anspruch 1, wobei das Drosselelement (60) in seiner zweiten Stellung den ersten Kanal (50) vollständig verschließt.

9. Hahn (10) gemäß Anspruch 1, wobei der erste (50) und der zweite (52) Kanal in einen einzigen Abschnitt (54) übergehen, der stromaufwärts des einzigen Gasauslasses (30) des Hahns (10) angeordnet ist.

10. Hahn (10) gemäß Anspruch 9, wobei das Drosselelement an dem einzigen Abschnitt (54) angeordnet ist, in den die erste (50) und die zweite (52) Leitung ineinander übergehen.

11. Hahn (10) gemäß Anspruch 1, wobei das Drosselelement (60) eine so bemessene Bohrung bereitstellt, dass das Drosselelement (60) in einer ersten Schraubstellung einen Maximalwert der Durchflussöffnung eines der Kanäle definiert (50, 52) und das Drosselelement (60) in einer zweiten Schraubstellung einen Wert der Durchflussöffnung von einem der Kanäle (50, 52) definiert, der niedriger ist als der Maximalwert.

12. Hahn (10) gemäß Anspruch 1, wobei der Mindestwert der Durchflussöffnung von mindestens einem der Kanäle (50, 52), der durch eine Stellung des Drosselelements (60) definiert ist, mit der vollständigen Blockierung einer solchen Durchflussöffnung übereinstimmt.

13. Hahn (10) gemäß Anspruch 1, wobei der Hahn (10) einen Umgehungskanal aufweist, der von dem Ventilkegel (40) durch eine entsprechende Umgehungsbohrung (73) gespeist wird und nicht von dem Drosselelement (60) beeinflusst wird, wobei der Umgehungskanal in der Lage ist, den Gaseinlass (20) und den einzigen Gasauslass (30) des Hahns (10) direkt zu verbinden, wenn der Ventilkegel (40) in einer geeigneten Stellung angeordnet ist.

## Revendications

1. Robinet de brûleur à gaz (10), configuré pour ajuster l'afflux de différentes typologies de gaz dans un brûleur à gaz unique, dans lequel le robinet (10) comprend une entrée (20) pour le gaz entrant dans le robinet (10) et une sortie unique (30) pour le gaz sortant du robinet (10), dans lequel un bouchon de vanne (40) est interposé entre ladite entrée (20) et ladite sortie unique (30), ledit bouchon de vanne (40) étant commutable entre au moins une première position de blocage pour bloquer le flux de gaz et au moins une seconde position autorisant le flux de gaz, dans lequel, en aval du bouchon de vanne (40) par rapport à la direction d'acheminement de gaz, il y a au moins un premier conduit (50) autorisant le flux de gaz vers la sortie unique (30) du robinet (10), dans lequel ledit robinet (10) fournit un élément d'obstruction réglable (60) conçu pour être déplacé d'une première position, dans laquelle ledit élément d'obstruction (60) définit une valeur maximale de l'orifice de flux de gaz, vers une position dans laquelle ledit élément d'obstruction (60) définit une valeur minimale de l'orifice de flux de gaz,
dans lequel, en aval du bouchon de vanne (40) par rapport à la direction d'acheminement de gaz, il y a au moins un premier (50) et un second (52) conduit qui permettent au gaz de circuler vers la sortie unique (30) du robinet (10) et dans lequel l'élément d'obstruction réglable (60) peut être déplacé d'une première position, dans laquelle ledit élément d'obstruction (60) définit une valeur maximale de l'orifice de flux d'au moins un desdits conduits (50, 52), vers une seconde position dans laquelle ledit élément d'obstruction (60) définit une valeur minimale de l'orifice de flux pour lesdits deux conduits (50, 52) et dans lequel ledit élément d'obstruction (60) est une vis réglable, la première et la seconde position dudit élément d'obstruction (60) étant choisies en fonction de la typologie de gaz.

2. Robinet (10) selon la revendication 1, dans lequel l'entrée (56) du premier conduit (50) est séparée de l'entrée (58) du second conduit (50).

3. Robinet (10) selon la revendication 1, dans lequel ledit bouchon de vanne (40) comprend une première série de trous (70) et une seconde série de trous (72), dans lequel chaque série (70, 72) de trous peut être disposée au moins partiellement au niveau de l'entrée (56, 58) d'un conduit respectif (50, 52).

4. Robinet (10) selon la revendication 3, dans lequel les trous de chaque série (70, 72) de trous présentent des tailles progressivement croissantes, sinon décroissantes ou constantes.

5. Robinet (10) selon la revendication 1, dans lequel ledit bouchon de vanne (40) est alimenté par un trou inférieur (75).

6. Robinet (10) selon l'une quelconque des revendications précédentes, dans lequel ledit bouchon de vanne (40) est un bouchon de vanne rotatif actionnable par une tige d'entraînement (42).

7. Robinet (10) selon la revendication 1, dans lequel ledit élément d'obstruction (60), dans sa première position, ouvre complètement les deux conduits (50, 52).

8. Robinet (10) selon la revendication 1, dans lequel ledit élément d'obstruction (60), dans sa seconde position, ferme complètement le premier conduit (50).

9. Robinet (10) selon la revendication 1, dans lequel les premier (50) et second (52) conduits fusionnent en une longueur unique (54) disposée en amont de la sortie de gaz unique (30) depuis le robinet (10).

10. Robinet (10) selon la revendication 9, dans lequel l'élément d'obstruction est disposé au niveau de la longueur unique (54) dans laquelle les premier (50) et second (52) conduits fusionnent.

11. Robinet (10) selon la revendication 1, dans lequel l'élément d'obstruction (60) fournit un trou calibré tel que, dans une première position vissée, ledit élément d'obstruction (60) définit une valeur maximale de l'orifice de flux de l'un desdits conduits (50, 52) et, dans une seconde position vissée, ledit élément d'obstruction (60) définit une valeur de l'orifice de flux d'un desdits conduits (50, 52) inférieure à la valeur maximale.

12. Robinet (10) selon la revendication 1, dans lequel la valeur minimale de l'orifice de flux d'au moins un desdits conduits (50, 52), qui est définie par une position dudit élément d'obstruction (60), coïncide avec le blocage complet de cet orifice de flux.

13. Robinet (10) selon la revendication 1, dans lequel ledit robinet (10) présente un canal de dérivation alimenté par le bouchon de vanne (40) à travers un trou de dérivation respectif (73) et non affecté par l'élément d'obstruction (60), ledit canal de dérivation pouvant connecter directement l'entrée de gaz (20) et la sortie unique (30) du robinet (10) lorsque le bouchon de vanne (40) est disposé dans une position convenable.
